# EUROPÄISCHE PATENTANMELDUNG

(11) **EP 1 251 303 A1**
(43) Veröffentlichungstag der Anmeldung: **23.10.2002**
(21) Anmeldenummer: 02006575.1
(22) Anmeldetag: 21.03.2002
(51) Int. Cl.: F16L 5/10

(54) **Montagesystem für eine Wanddurchführung**

(30) Priorität: 17.04.2001 DE 10118737
(71) Anmelder: Hawle Armaturen GmbH, 83395 Freilassing (DE)
(72) Erfinder: Frey, Alexander, 83404 Feldkirchen (DE); Graspeuntner, Eva, 83317 Hörafing (DE); Kern, Konrad, 83416 Saaldorf-Surheim (DE)
(74) Vertreter: Rögner, Jürgen, Dipl.-Ing.

(57) **Zusammenfassung**

Die Erfindung betrifft ein Montagesystem für eine Wanddurchführung, bei der eine mediumführende Leitung (10) durch ein Schutzrohr (20) in einem Wanddurchbruch hindurchgeht, mit einer Befestigungsvorrichtung, welche die mediumführende Leitung (10) zumindest drehfest an dem Schutzrohr (20) bzw. an einem Wandflansch (7) des Schutzrohres (20) festlegt, wobei die Befestigungseinrichtung (5) reib- bzw. kraftschlüssig an einem zylindrischen Abschnitt der mediumführenden Leitung (10) fixiert ist.

## Beschreibung

Die vorliegende Erfindung betrifft ein Montagesystem für eine Wanddurchführung, bei der eine mediumführende Leitung durch ein Schutzrohr in einem Wanddurchbruch hindurchgeht. Solche mediumführenden Leitungen werden beispielsweise auch Hauseinführungen genannt und dienen dazu, Medien wie Gas oder Wasser durch eine Wand bzw. Mauer hindurch in ein Haus einzuführen. Herkömmliche Mauer- bzw. Wanddurchführungen umfassen einen Wanddurchbruch, in dem ein Schutzrohr verläuft. Dieses Schutzrohr ist meist durch Flansche an beiden Seiten gegen ein Herausziehen gesichert, wobei eine solche Gefahr insbesondere dann besteht, wenn ein Bagger bei Räumarbeiten in das durch das Schutzrohr hindurchgeführte Kabel eingreift. Die Flansche, die im Weiteren auch Wandflansche genannt werden, da sie das Schutzrohr von den beiden Außenseiten her zur Wand hin abstützen und auch abdichten, halten also das Schutzrohr an der Wand fest.

Durch das Schutzrohr hindurch verlaufen mediumführende Leitungen, beispielsweise Gasoder Wasserleitungen. Im Bereich des Schutzrohres ist hierzu oftmals ein separater Leitungsabschnitt vorgesehen, der im Weiteren als Wanddurchführungsleitung bezeichnet wird.

Diese Wanddurchführungsleitung muss an dem Schutzrohr befestigt werden, und zwar insbesondere gegen eine Dreh- bzw. Torsionsbeanspruchung aber auch gegen axiale Verschiebung.

Gemäß dem Stand der Technik findet eine solche Befestigung meist dadurch statt, dass an der Wanddurchführungsleitung ein Abschnitt mit einem mehrkantigen Profil ausgebildet wird, auf welches dann ein wiederum mehrkantiges Aufsatzstück axial unverschiebbar aufgesetzt wird. Dieses Aufsatzstück wird dann mit einem Wandflansch verbunden, zum Beispiel verschraubt, und so wird die Wanddurchführungsleitung an dem Schutzrohr fixiert. Dieses System weist aber schon grundsätzlich den Nachteil auf, dass spezielle Aufsatzstücke und spezielle Kantprofile für jede Leitung vorzusehen sind, und dies macht das gesamte Montagesystem sehr unflexibel für den Einsatz unterschiedlicher Leitungen bzw. Schutzrohre. Außerdem lassen sich einmal "abgedrehte" formschlüssige Verbindungen, wie beispielsweise die Kant-Verbindungen zwischen Schutzrohr und Durchführungsleitung gemäß dem Stand der Technik in keinem Fall wieder herstellen, insbesondere wenn es sich um Kunststoffbauteile handelt, und es müssen neue, teure Ersatzbauteile angeschafft werden.

Es ist deshalb die Aufgabe der vorliegenden Erfindung, ein Montagesystem für eine Wanddurchführung bereitzustellen, welches die oben genannten Nachteile des Standes der Technik überwindet. Insbesondere soll ein Montagesystem bereitgestellt werden, das universell und flexibel einsetzbar, torsionsfest und notfalls auch reparabel ist.

Diese Aufgabe wird erfindungsgemäß gelöst durch ein Montagesystem für eine Wanddurchführung, bei der eine mediumführende Leitung durch ein Schutzrohr in einem Wanddurchbruch hindurchgeht, mit einer Befestigungsvorrichtung, welche die mediumführende Leitung zumindest drehfest an dem Schutzrohr bzw. an einem Wandflansch des Schutzrohres festlegt, wobei die Befestigungseinrichtung reib- bzw. kraftschlüssig an einem zylindrischen Abschnitt der mediumführenden Leitung fixiert ist.

Durch diese erfindungsgemäße Ausgestaltung wird das Montagesystem äußerst flexibel, da es sehr viel einfacher ist, an einer mediumführenden Leitung einen zylindrischen Abschnitt zur Befestigung auszuwählen, als einen speziell ausgebildeten Formschlussabschnitt bereitzustellen. Ferner wird das erfindungsgemäße Montagesystem, da für reib- bzw. kraftschlüssige Befestigungen an zylindrischen Leitungsabschnitten erfindungsgemäß mehrere Befestigungssysteme zur Auswahl stehen, die durchaus herkömmliche und im Handel erhältliche Befestigungen umfassen können, preislich sehr viel günstiger werden als die bekannte Formschlusslösung. Es lässt sich auch sehr viel einfacher an verschiedene Rohrgrößen anpassen, wenn beispielsweise flexible Fixierungseinrichtungen, wie Manschetten verwendet werden.

Einen großen Vorteil weist ein erfindungsgemäßes Montagesystem dann auf, wenn zur Fixierung der Befestigungseinrichtung eine Fixierungseinrichtung mit verstellbarer Fixierungswirkung verwendet wird, da sich eine solche Verbindung schon vorab auf zu erwartende Torsionswirkungen einstellen lässt.

Ganz allgemein kann die Fixierungseinrichtung für die Befestigungseinrichtung eine die Leitung 10 umgreifende, verschraubbare Schelle sein, wobei mehrere Ausgestaltungsmöglichkeiten vorhanden sind. Einerseits ist es möglich eine geschlossene, auf die Leitung aufschiebbare Schelle zu verwenden, wobei andererseits auch eine offene Schelle verwendet werden kann. Als offene Schelle bietet sich die Wahl einer zweiteiligen Umgriffschelle an, welche beidseitig an abstehenden Flanschabschnitten verschraubt werden kann, und andererseits kann beispielsweise eine zweiteilige Umgriffschelle verwendet werden, wobei beiden Schellenteile an einer Seite gelenkig miteinander verbunden sind und an der anderen Seite an abstehenden Flanschabschnitten verschraubt werden können. Hier sei noch gesagt, dass starre und flexible Schellenteile und längere bzw. kürzere Schrauben verwendet werden können, um ein höchstes Maß an Anpassungsfähigkeit für verschiedene Leitungen zu erreichen.

Was die Verbindung zwischen der Befestigungseinrichtung und dem Wandflansch des Schutzrohres betrifft, so ist im Rahmen der vorliegenden Erfindung eine Ausgestaltung denkbar, bei der die Befestigungseinrichtung formschlüssig und drehfest in eine Ausnehmung des Wandflansches des Schutzrohres eingreift. Da im Bereich dieser Verbindung schon größere Radien vorhanden sind, sollten sich solche Formschlüsse ohne weiteres als dauerhaft haltbar erweisen. Auch hier sind mehrere Gestaltungsmöglichkeiten vorhanden, beispielsweise kann die Befestigungseinrichtung außen umlaufende, im Wesentlichen runde Vorsprünge aufweisen, die in entsprechend ausgeformte Ausschnitte in der Ausnehmung im Wandflansch eingreifen. Andererseits besteht die Möglichkeit, das Montagesystem so auszugestalten, dass die Befestigungseinrichtung einen Außensechskant aufweist, der in einem entsprechenden Innensechskant in der Ausnehmung eingreift. Solche Ausführungsformen sind natürlich nicht auf sechskantige Gestaltungen beschränkt, es können Formen mit mehr oder weniger Kanten verwendet werden.

Auch was das Verhältnis zwischen Befestigungseinrichtung und Fixierungseinrichtung betrifft, besteht innerhalb der Erfindung Spielraum für eine Auswahl je nach Einsatzzweck. So kann die Befestigungseinrichtung einteilig mit der Fixierungseinrichtung ausgebildet sein, andererseits können Befestigungseinrichtung und Fixierungseinrichtung separat als Einzelteile ausgebildet sein, wobei in einem solchen Fall mit der Fixierungseinrichtung über der Befestigungseinrichtung (beispielsweise zweiteilig) eine Fixierung der Letzteren auf der Leitung erfolgt.

Die Erfindung wird im Weiteren anhand der beiliegenden Zeichnungen, die Ausführungsbeispiele zeigen, näher erläutert. Es zeigen:
- Figur 1: eine Zusammenbauzeichnung eines erfindungsgemäßen Montagesystems im montierten Zustand;
- Figur 2: eine Zusammenbauzeichnung eines erfindungsgemäßen Montagesystems im nicht montierten Zustand; und
- Figuren 3 und 4: zwei verschiedene Ausgestaltungen für die Formschlussfixierung zwischen Befestigungseinrichtung und Wandflansch.

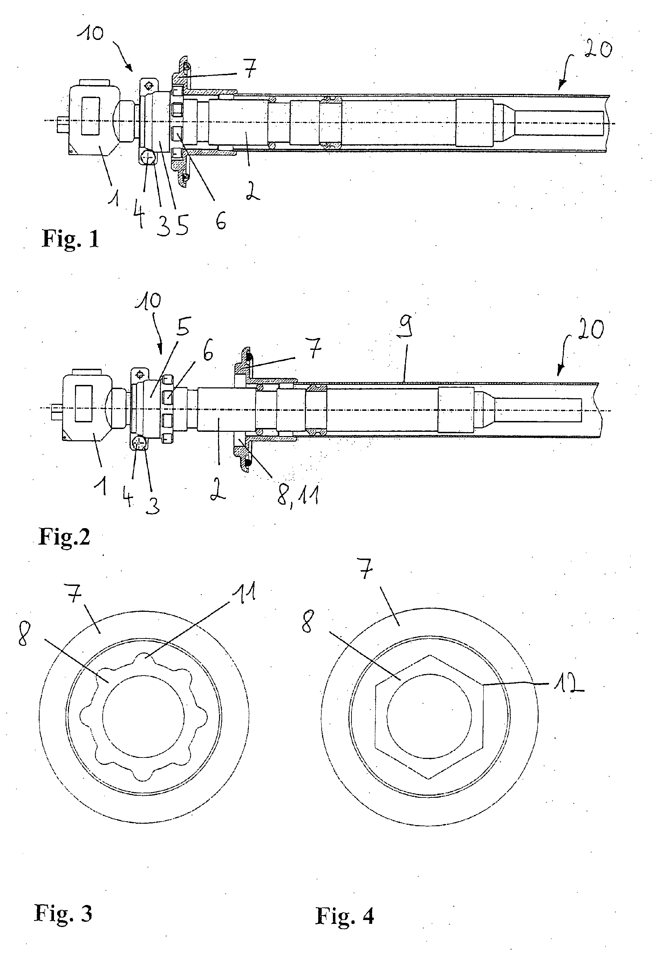

In den Figuren 1 und 2 ist ein erfindungsgemäßes Montagesystem für eine Wanddurchführung gezeigt, wobei die einzelnen Bauteile wie folgt bezeichnet sind:

Das Bezugszeichen 10 bezeichnet insgesamt eine Durchführungsleitung, die in dem im Ganzen mit 20 angedeuteten Schutzrohr angeordnet ist. Die Durchführungsleitung 10, die hier gezeigt ist, ist eine Durchführungsleitung für Gas, und sie weist an ihrem linken Ende einen Gashahn 1 auf, von dem sich der Leitungsabschnitt 2, 9 weg erstreckt, durch den das Gas geführt wird. Neben dem Gashahn 1 ist auf einem zylindrischen Teil des Leitungsabschnittes 2 die Befestigungseinrichtung aufgebracht, die im Weiteren auch als Manschette 5 bezeichnet wird. Diese Manschette 5 ist reib- bzw. kraftschlüssig auf der Leitung 2 fixiert, und zwar über die Fixierungseinrichtung, die aus der Schelle 3 besteht, die zweiteilig aufgebaut ist, wobei die beiden Teile die Leitung umgreifen und über Schrauben 4 gegeneinander angezogen werden, bis die Manschette 5 drehfest und axialfest auf der Leitung aufsitzt. In den Figuren 1 und 2 ist noch zu sehen, dass die Manschette 6 an ihrem rechten Ende umlaufende Vorsprünge bzw. Nocken 6 aufweist, und mit diesem Teil greift die Manschette 5 in eine Aussparung 8 in den Wandflansch 7 des Schutzrohres 20 ein, wobei die Aussparung 8 am besten in Figur 2 und in Figur 3 erkennbar ist.

Aus der Figur 3 geht hervor, dass die Aussparung ringförmig mit wiederum nockenförmigen Ausnehmungen 11 ausgestaltet ist, so dass der Wandflansch 7 das Ende der Manschette 5 mit den Nocken 6 formschlüssig aufnehmen kann und jede Drehbewegung zwischen Manschette 5 und Wandflansch 7 verhindert wird. Da ferner die Manschette 5, wie vorher beschrieben, dreh- und axialfest auf der Durchführungsleitung 10 aufsitzt, wird somit insgesamt ein Verdrehen der Leitung 10 innerhalb des Schutzrohrs 20 verhindert.

Die Figur 4 zeigt noch, dass sich der Formschluss zwischen Manschette 5 und Wandflansch 7 auch anderes lösen lässt, beispielsweise durch ein Sechskantprofil, und die entsprechende Ausnehmung im Wandflansch 7 ist in Figur 4 mit dem Bezugszeichen 12 gekennzeichnet.

Natürlich beschränkt sich eine erfindungsgemäße Anwendung nicht auf einen Formschluss zwischen Manschette 5 und Wandflansch 7; auch hier können alle möglichen Befestigungsarten verwendet werden, wie zum Beispiel Reib- und Kraftschluss bzw. eine Verbindung durch Verbindungselemente wie Schrauben oder Nieten. Auch Verklebungen können verwendet werden, und zwar sowohl bei der Verbindung zwischen Manschette 5 und Durchführungsleitung 10 als auch bei der Verbindung zwischen Durchführungsleitung 10 und Wandflansch 7.

Gegen eine axiale Verschiebung kann die Durchführungsleitung 20 ebenfalls über die Manschette 5 am Schutzrohr 20 bzw. am Wandflansch 7 gesichert werden, obwohl dies nicht dargestellt ist. Hier bietet sich beispielsweise die zusätzliche Anordnung von flanschartigen Absätzen an der Manschette 5 an deren Umfang an, über die dann eine Schraubbefestigung am Wandflansch erfolgen kann.

## Patentansprüche

1. Montagesystem für eine Wanddurchführung, bei der eine mediumführende Leitung (10) durch ein Schutzrohr (20) in einem Wanddurchbruch hindurchgeht, mit einer Befestigungsvorrichtung, welche die mediumführende Leitung (10) zumindest drehfest und auszugsicher an dem Schutzrohr (20) bzw. an einem Wandflansch (7) des Schutzrohres (20) festlegt, **dadurch gekennzeichnet, dass** die Befestigungseinrichtung (5) reib- bzw. kraftschlüssig an einem zylindrischen Abschnitt der mediumführenden Leitung (10) fixiert ist.

2. Montagesystem nach Anspruch 1, **dadurch gekennzeichnet, dass** zur Fixierung der Befestigungseinrichtung eine Fixierungseinrichtung mit verstellbarer Fixierungswirkung verwendet wird.

3. Montagesystem nach Anspruch 1 oder 2, **dadurch gekennzeichnet, dass** die Fixierungseinrichtung für die Befestigungseinrichtung eine die Leitung (10) umgreifende, verschraubbare Schelle (3) ist.

4. Montagesystem nach Anspruch 3, **dadurch gekennzeichnet, dass** die Schelle eine geschlossene, auf die Leitung (10) aufschiebbare Schelle ist.

5. Montagesystem nach Anspruch 3, **dadurch gekennzeichnet, dass** die Schelle eine offene Schelle ist.

6. Montagesystem nach Anspruch 5, **dadurch gekennzeichnet, dass** die Schelle eine zweiteilige Umgriffschelle (3), welche beidseitig an abstehenden Flanschabschnitten verschraubt werden kann.

7. Montagesystem nach Anspruch 5, **dadurch gekennzeichnet, dass** die Schelle eine zweiteilige Umgriffschelle (3), wobei beide Schellenteile an einer Seite gelenkig miteinander verbunden sind und an der anderen Seite an abstehenden Flanschabschnitten verschraubt werden können.

8. Montagesystem nach einem der Ansprüche 1 bis 7, **dadurch gekennzeichnet, dass** die Befestigungseinrichtung (5) formschlüssig und drehfest in eine Ausnehmung (8) des Wandflansches (7) des Schutzrohres (20) eingreift.

9. Montagesystem nach Anspruch 8, **dadurch gekennzeichnet, dass** die Befestigungseinrichtung (5) außen umlaufende, im wesentlichen runde Vorsprünge (6) aufweist, die in entsprechend ausgeformte Ausschnitte (11) in der Ausnehmung (8) eingreifen.

10. Montagesystem nach Anspruch 8, **dadurch gekennzeichnet, dass** die Befestigungseinrichtung (5) einen Außensechskant aufweist, der in einen entsprechenden Innensechskant (12) in der Ausnehmung (8) eingreift,

11. Montagesystem nach einem der Ansprüche 1 bis 10, **dadurch gekennzeichnet, dass** die Befestigungseinrichtung einteilig mit der Fixierungseinrichtung ausgebildet ist.

12. Montagesystem nach einem der Ansprüche 1 bis 10, **dadurch gekennzeichnet, dass** die Befestigungseinrichtung und die Fixierungseinrichtung separat als Einzelteile ausgebildet sind.
